Europäisches Patentamt

(19) European Patent Office

Office européen des brevets

(11) Veröffentlichungsnummer: **0 231 415**
**B1**

(12) **EUROPÄISCHE PATENTSCHRIFT**

(45) Veröffentlichungstag der Patentschrift:
28.03.90

(51) Int. Cl.⁴: **C04B 28/26, C09K 17/00**

(21) Anmeldenummer: **86101482.7**

(22) Anmeldetag: **05.02.86**

(54) **Mittel auf der Basis von modifizierten Alkalimetallsilikatlösungen zum Abdichten und/oder Verfestigen und/oder zum Binden.**

(43) Veröffentlichungstag der Anmeldung:
12.08.87 Patentblatt 87/33

(45) Bekanntmachung des Hinweises auf die Patenterteilung:
28.03.90 Patentblatt 90/13

(84) Benannte Vertragsstaaten:
AT BE CH DE FR GB IT LI LU NL SE

(56) Entgegenhaltungen:
EP-A- 0 028 495
DE-A- 2 636 313
DE-A- 2 714 889
FR-A- 1 166 581
US-A- 3 202 214

PATENTS ABSTRACTS OF JAPAN, Band 4,
Nr. 124 (C-23)[606], 2. September 1980; JP - A - 55 80 487

(73) Patentinhaber: Henkel Kommanditgesellschaft auf
Aktien, Postfach 1100 Henkelstrasse 67,
D-4000 Düsseldorf-Holthausen(DE)

(72) Erfinder: Friedemann, Wolfgang, Dr.,
Stephanusstrasse 14, D-4040 Neuss 23(DE)
Erfinder: Pesch, Wolfgang, Noithausener Strasse 10,
D-4048 Grevenbroich(DE)
Erfinder: Feulner, Kurt, Nienhuser Busch 42,
D-4300 Essen 12(DE)

ACTORUM AG

**Beschreibung**

Die Erfindung betrifft Mittel auf der Basis von modifizierten Alkalimetallsilikatlösungen zum Abdichten und/oder Verfestigen und/oder zum Binden, die Anwendung dieser Mittel sowie ein Verfahren zum Abdichten und/oder Verfestigen und/oder zum Binden unter Einsatz dieser Mittel.

Mittel auf der Basis von wässrigen Alkalimetallsilikatlösungen sind seit langem bekannt und werden in großem Umfang in der Praxis eingesetzt, z.B. beim Verfestigen und Abdichten von Erdreich und von Böden. Beispielsweise werden Alkalimetallsilikatlösungen beim Tunnelbau oder beim U-Bahnbau in das Erdreich injiziert, um den Boden zu verfestigen und gegebenenfalls bereits errichtete Gebäude zu unterfangen und das Erdreich zu verfestigen. Weiterhin können die wässrigen Alkalimetallsilikatlösungen zum Verfestigen von Baustoffen und Mauerwerk sowie als Bindemittel für aus Mineralien bestehende Körper verwendet werden.

Werden Alkalimetallsilikatlösungen ohne Zusätze verwendet, so können sie die technischen Anforderungen oft nich erfüllen. So sind Härte, Elastizität und Beständigkeit gegen Temperaturen und Wasser häufig mangelhaft. Daher sind schone Zahlreiche Vorschläge gemacht worden, um die Eigenschaften der Alkalimetallsilikatlösungen zu verbessern. Insbesondere wurden Härter verschiedenster Art eingesetzt, wie z.B. Glyoxal oder Dicarbonsäureester.

Die FR-PS 1 166 581 beschreibt die Verwendung von Glyoxal als Härter für Alkalimetallsilikatlösungen. Die rasche Reaktion zwischen konzentrierten Alkalimetallsilikatlösungen und dem Glyoxal grenzen die Anwendungsmöglichkeiten jedoch stark ein.

Es ist ferner bekannt, die Reaktionsgeschwindigkeiten der Alkalimetallsilikatlösungen, die Härter enthalten, durch Verdünnen mit Wasser, d.h. durch Absenken der Feststoffgehalte, im gewünschten Maße zu verlängern. Damit ergibt sich jedoch der Nachteil, daß beispielsweise die Verfestigung von Böden und/oder mineralischen Baustoffen und Formstoffen nicht ausreichend erfolgt und dadurch wiederum die Anwendungsmöglichkeiten stark eingeschränkt werden.

Die EP-A 0 028 495 beschreibt Mittel zur Bodenverfestigung, die wässrige Alkalimetallsilikatlösungen, Glyoxal und Wasserstoffperoxid sowie gegebenenfalls anorganische Salze enthalten. Als anorganische Salze kommen solche der Gruppen I bis III in Frage, insbesondere Natriumaluminat, Aluminiumchlorid, Kupfersulfat, Zinkchlorid und Kalziumchlorid, wobei Kalziumchlorid bevorzugt ist. Durch Verfestigung des Erdreiches mit diesen Mitteln wird jedoch eine befriedigende Druckfestigkeit nicht erreicht.

In der DE-OS 2 242 713 wird ein Verfahren zum Stabilisieren und Verfestigen von Böden mit Hilfe einer wässrigen Silikatlösung unter Zusatz eines gelbildenden Mittels beschrieben. Als gelbildendes Mittel dient hierbei ein Gemisch aus Bernsteinsäuredialkylester mit Dialkylestern homologer höherer Carbonsäuren, wie Glutarsäure und/oder Adipinsäure. Nachteil dieser Mittel ist jedoch, daß nach dem Einbringen solcher Mittel in den Boden Grundwässer und Boden mit großen Mengen an organischen Substanzen belastet werden, die abgebaut werden müssen. Diese Art der Belastung wird als "chemischer Sauerstoffbedarf" (CSB-Wert) gemessen.

Die DE-OS 2 714 889 beschreibt Bindemittel auf Basis von Akalimetallsilikatlösungen mit verkürzter Abbindezeit und verbesserter Wasserfestigkeit. Diese Bindemittel auf der Basis von Alkalimetallsilikatlösungen mit einem Molverhältnis $SiO_2 : Me_2O$ im Bereich von 1,8 bis 4,0 und einem Feststoffgehalt von 20 bis 55 Gew.-% sind durch einen Gehalt an Kaliummetaborat gekennzeichnet, wobei das Molverhältnis $SiO_2$ : Kaliummetaborat im Bereich von 0,1 bis 50 liegt. Die mit diesen Bindemitteln zu erzielenden Vorteile, d.h. die hohe Wasserbeständigkeit and insbesondere die erhöhte Abbindegeschwindigkeit, lassen sich jedoch nicht mit Natriummetaborat erzielen, wie aus Beispiel 1 und den darin beschriebenen Vergleichsbeispielen E und F der DE-OS 2 714 889 hervorgeht.

Aufgabe der vorliegenden Erfindung ist es, durch Modifizierung der Alkalimetallsilikatlösungen die angegebenen Nachteile des Standes der Technik zu beseitigen und insbesondere Alkalimetallsilikatlösungen zur Verfügung zu stellen, die für die Praxis und Anwendung ausreichend lange Gelierzeiten und Härtungszeiten auch bei hohen Feststoffgehalten aufweisen.

Gelöst wird die Aufgabe durch zur Verfügung stellen von Mitteln zum Abdichten, Verfestigen und Binden auf der Basis von modifizierten Alkalimetallsilikatlösungen.

Die Erfindung betrifft Mittel zum Abdichten und/oder Verfestigen und/oder zum Binden auf der Basis von modifizierten Alkalimetallsilikatlösungen, die dadurch gekennzeichnet sind, daß sie Alkalimetallsilikatlösungen mit einem Molverhältnis $SiO_2 : Me_2O$, wobei Me Natrium oder Kalium bedeutet, von 2 bis 4,5, Natriummetaborat und/oder Kaliummetaborat in einem Molverhältnis $SiO_2 : B_2O_3$ von 5 bis 400 und Glyoxal enthalten.

Gegenüber dem Stand der Technik - gemäß der FR-PS 1 166 581 und der DE-OS 2 714 889 - ist es überraschend, daß die Mittel gemäß vorliegender Erfindung, die Alkalimetallsilikatlösungen in Kombination mit Natriummetaborat und/oder Kaliummetaborat und mit Glyoxal enthalten, auch bei hohen Feststoffgehalten zu Abbindeverzögerungen führen, d.h., daß die Kombination zweier Wasserglashärter bzw. -beschleuniger eine Härtungsverzögerung bewirkt. Die erfindungsgemäßen Mittel weisen eine erhöhte Gelierzeit und Härtungszeit auch bei hohen Feststoffgehalten auf.

Weder der Einsatz von Glyoxal alleine, noch der Einsatz von Alkalisierungsmitteln, wie z.B. Natriumhydroxid, Kaliumhydroxid oder Aminen, noch von anderen Boraten, wie z.B. Kaliumtetraborat, ergaben den gewünschten Effekt, wie aus den später folgenden Vergleichsbeispielen hervorgeht.

Bevorzugt enthalten die Mittel gemäß der Erfindung Akalimetallsilikate mit $SiO_2 : Me_2O$ Molverhältnissen von 3,0 bis 4,0.

In den Mitteln gemäß der Erfindung beträgt das $SiO_2 : B_2O_3$ Molverhältnis vorzugsweise 7 bis 60.

Das Glyoxal wird in Mengen von 0,4 Gew.-% bis 12 Gew.-%, vorzugsweise von 1,5 Gew.-% bis 7 Gew.-% in den erfindungsgemäßen Mitteln verwendet. Vorzugsweise wird Glyoxal technischer Qualität verwendet. Ein Glyoxal technischer Qualität ist z.B. das Produkte Glyfix® CS 50 der Firma Hoechst.

In den Mitteln gemäß der Erfindung beträgt die $SiO_2$- Konzentration der anwendungsfertigen Silikatlösungen maximal 30 Gew.-%.

Die erfindungsgemäßen Mittel können zum Abdichten oder Verfestigen von sandigen Böden verwendet werden.

Ferner eignen sich die erfindungsgemäßen Mittel zum Abdichten und/oder Verfestigen von mineralischen Baustoffen, wie z.B. von Beton, von mineralischen Platten und auch von Mauerwerk.

Schließlich eignen sich die erfindungsgemäßen Mittel auch als Bindemittel für mineralische Formkörper, wie sie z.B. in Gießereien verwendet werden.

Die Erfindung betrifft dementsprechend auch die Verwendung der erfindungsgemäßen Mittel zum Abdichten und/oder Verfestigen von Böden, zum Abdichten und/oder Verfestigen von mineralischen Baustoffen wie Beton, Mauerwerk, mineralischen Platten und dergleichen und zum Binden für mineralische Formkörper.

Weiterhin betrifft die Erfindung Verfahren zum Abdichten und/oder Verfestigen von Böden, von mineralischen Baustoffen und zum Binden von mineralischen Formkörpern, wobei die Verfahren dadurch gekennzeichnet sind, daß man die erfindungsgemäßen Mittel einsetzt.

Gegenüber der Verwendung von Härtergemischen nach dem Stand der Technik - wie sie beispielsweise in der DE-OS 2 242 713 beschrieben sind - ergeben sich bei der Verwendung der erfindungsgemäßen Mittel deutlich geringere Belastungen des Erdreichs und der Böden und damit auch des Grundwassers mit organischen Bestandteilen. Dies drückt sich durch stark herabgesetzte Werte des chemischen Sauerstoffbedarfs (CSB-Wert) aus (siehe Vergleichsbeispiel 4).

Die Erfindung wird durch die folgenden Beispiele erläutert.

## I Zur Bodenverfestigung durch Silikatgelinjektionen

Bei der Silikatgelinjektion sind die Gelierzeit der fertigen Injektionslösung und der Verfestigungsgrad der injizierten Böden Maßstab für die Qualität und Anwendbarkeit der Produkte. Bei den folgenden Beispielen wurden deshalb diese Kriterien bestimmt, und mit den Anforderungen der Praxis (Gelzeit 30 bis 60 min, Druckfestigkeit $\geq$ 200 $N/cm^2$) verglichen. Die Bestimmung der Gelierzeit erfolgte mit 100 ml Injektionslösung in einem Polybecher bei Raumtemperatur, ohne Kühlung, auf einem Magnetrührer mit der Einstellung Stufe 3, gemessen wurde die Zeit bis zum Stillstand des Rührstabes durch die einsetzende Gelierung.

Zur Prüfung der Druckfestigkeit wurden 200 g trockener Quarzsand F32 zu zylindrischen Prüfkörpern (Durchmesser 50 mm, Höhe 60 mm) verdichtet (Dichte 1,7 $g/cm^3$). Anschließend wurde die Injektionslösung von unten eingepreßt, bis der Flüssigkeitsspiegel die Prüfkörperoberfläche erreicht hatte. Nach Härtung der Prüfkörper (5 Stunden) wurden sie ausgeschalt und in einem luftdicht verschlossenen Kunststoffbecher 7 Tage bei Raumtemperatur (21 bis 22°C) bis zur Prüfung der Druckfestigkeit belassen.

Die Ermittlung der Druckfestigkeit der Prüfkörper erfolgte mit einer Prüfapparatur nach Georg Fischer AG, Postfach 689, CH-8201 Schaffhausen.

Für die Beispiele 1 bis 7 wurden die marktgängigen Wasserglaslösungen Natronwasserglas HK30, mit einem $SiO_2$-Gehalt von 22,01 % und einem $Na_2O$-Gehalt von 5,67 %, einer Dichte von 1261 $kg/m^3$ (bei 20°C), einer Viskosität von 18 mPas (20°C) und einem Molverhältnis $SiO_2 : Na_2O$ von 4,0 sowie Natronwasserglas 37/40 mit einem $SiO_2$-Gehalt von 26,66 %, einem $Na_2O$-Gehalt von 7,94 %, einer Dichte von 1349 $kg/m^3$ (20°C), einer Viskosität von 56 mPas (20°C) und einem Mol-Verhältnis $SiO_2 : Na_2O$ von 3,46 eingesetzt.

## Beispiel 1

900 ml Natronwasserglas HK 30 wurden mit 30 ml enthärtetem Wasser, 20 ml einer 41 %igen Kaliummetaboratlösung (Dichte = 1,493 $g/cm^3$) und 50 ml einer 40%igen Glyoxallösung (Dichte = 1,270 $g/cm^3$) zu 1000 ml Injektionslösung gemischt. Diese anwendungsfertige Silikatlösung hatte 19,85 % $SiO_2$ und 0,41 % $B_2O_3$, das ergibt ein Mol-Verhältnis $SiO_2 : B_2O_3$ von 55,7.

Die Gelierzeit, gemessen mit dem Magnetrührer, betrug 40 min, die Druckfestigkeit des Prüfkörpers 207 $N/cm^2$. Im Vergleich dazu ergab ein metaboratfreier Ansatz: 900 ml Natronwasserglas HK 30, gemischt mit 50 ml enthärtetem Wasser und 50 ml einer 40 %igen Glyoxallösung, gemessen mit dem Magnetrührer, eine Gelierzeit von 21 min und eine Druckfestigkeit des Prüfkörpers von 202 $N/cm^2$. Die metaboratfreie Injektionslösung hatte keine für die Praxis ausreichende Gelierzeit.

### Beispiel 2

700 ml Natronwasserglas 37/40 wurden mit 186,5 ml enthärtetem Wasser, 33,5 ml einer 41 %igen Kaliummetaboratlösung (Dichte = 1,493 $g/cm^3$) und 80 ml einer 40 %igen Glyoxallösung (Dichte = 1,270 $g/cm^3$) zu 1000 ml Injektionslösung gemischt. Diese anwendungsfertige Injektionslösung hatte 19,63 % $SiO_2$ und 0,68 % $B_2O_3$ und damit ein Mol-Verhältnis $SiO_2 : B_2O_3$ von 33,6.

Die Gelierzeit, gemessen mit dem Magnetrührer, betrug 43 min, die Druckfestigkeit des Prüfkörpers 272 $N/cm^2$. Im Vergleich dazu ergab der metaboratfreie Ansatz aus 700 ml Natronwasserglas 37/40, 220 ml enthärtetem Wasser und 80 ml der 40 %igen Glyoxallösung eine Gelierzeit von 16 min und eine Druckfestigkeit des Prüfkörpers von 251 $N/cm^2$. Auch bei dieser metaboratfreien Injektionslösung war die Gelierzeit für Praxiszwecke nicht ausreichend.

### Beispiel 3

Es wurden 900 ml Natronwasserglas HK 30 mit 35 ml enthärtetem Wasser, 30 ml einer 41 %igen Kaliummetaboratlösung (Dichte = 1,493 $g/cm^3$) und 35 ml einer technischen Glyoxallösung (Glyfix CS 50 der Fa. Hoechst France, Dichte = 1,41 $g/cm^3$) zu 1000 ml Injektionslösung gemischt. Diese anwendungsfertige Injektionslösung hatte 19,76 % $SiO_2$ und 0,62 % $B_2O_3$ und damit ein Mol-Verhältnis $SiO_2 : B_2O_3$ von 37.

Die Gelierzeit betrug 44 min, die Druckfestigkeit des Prüfkörpers 205 $N/cm^2$. Im Vergleich dazu ergab sich bei einer metaboratfreien Injektionslösung aus 900 ml Natronwasserglas HK 30, 65 ml enthärtetem Wasser und 35 ml technischer Glyoxallösung (Glyfix CS 50 der Fa. Hoechst France, Dichte = 1,41 $g/cm^3$) eine Gelierzeit von 20 min und eine Druckfestigkeit des Prüfkörpers von 200 $N/cm^2$. Die Gelierzeit der metaboratfreien Injektionslösung reichte für Praxiszwecke nicht aus.

### Beispiel 4

Aus 700 ml Natronwasserglas 37/40, 200 ml enthärtetem Wasser, 40 ml einer 41 %igen Kaliummetaboratlösung (Dichte = 1,493 $g/cm^3$) und 60 ml einer technischen Glyoxallösung (Glyfix CS 50 der Fa. Hoechst France, Dichte = 1,41 $g/cm^3$) wurden 1000 ml Injektionslösung hergestellt. Diese anwendungsfertige Injektionslösung hatte 19,54 % $SiO_2$ und 0,81 % $B_2O_3$ und damit ein Molverhältnis $SiO_2 : B_2O_3$ von 28.

Die Gelierzeit betrug 39 min und die Druckfestigkeit des Prüfkörpers 264 $N/cm^2$. Im Vergleich dazu hatte eine metaboratfreie Injektionslösung aus 700 ml Natronwasserglas 37/40, 240 ml enthärtetem Wasser und 60 ml technischer Glyoxallösung (Glyfix CS 50 der Fa. Hoechst France, Dichte = 1,410 $g/cm^3$) eine Gelierzeit von 16 min und eine Druckfestigkeit des Prüfkörpers von 248 $N/cm^2$. Auch hier reicht die Gelierzeit für Praxisanwendungen nicht aus.

### Beispiel 5

Aus 700 ml Natronwasserglas 37/40, 197,7 ml enthärtetem Wasser, 42,3 ml einer 32,9 %igen Natriummetaboratlösung (Dichte = 1,413 $g/cm^3$) und 60 ml technischer Glyoxallösung (Glyfix CS 50 der Fa. Hoechst France, Dichte = 1,41 $g/cm^3$) wurden 1000 ml Injektionslösung hergestellt. Sie enthielt 19,57 % $SiO_2$ und 0,81 % $B_2O_3$ und hatte ein Molverhältnis $SiO_2 : B_2O_3$ von 28.

Die Gelierzeit dieser Injektionslösung betrug 42 min, die Druckfestigkeit des Prüfkörpers 260 $N/cm^2$.

### Beispiel 6

Aus 700 ml Natronwasserglas 37/40, 198,7 ml enthärtetem Wasser, 21,2 ml einer 32,9 %igen Natriummetaboratlösung (Dichte = 1,413 $g/cm^3$), 20,1 ml einer 41 %igen Kaliummetaboratlösung (Dichte = 1,493 $g/cm^3$) und 60 ml technischem Glyoxal (Glyfix CS 50 der Fa. Hoechst France, Dichte = 1,41 $g/cm^3$) wurden 1000 ml Injektionslösung hergestellt. Sie enthielt 19,55 % $SiO_2$ und 0,81 % $B_2O_3$ und hatte ein Molverhältnis $SiO_2 : B_2O_3$ von 28.

Die Gelierzeit betrug 37 min, die Druckfestigkeit des Prüfkörpers betrug 262 $N/cm^2$.

### Beispiel 7

Aus 900 ml Natronwasserglas HK 30, 34,1 ml enthärtetem Wasser, 15,0 ml einer 41 %igen Kaliummetaboratlösung (Dichte = 1,493 $g/cm^3$), 15,9 ml einer 32,9 %igen Natriummetaboratlösung (Dichte = 1,413 $g/cm^3$) und 35 ml einer technischen Glyoxallösung (Glyfix CS 50 der Fa. Hoechst France, Dichte = 1,41 $g/cm^3$) wurden 1000 ml Injektionslösung hergestellt. Sie enthielt 19,77 % $SiO_2$ und 0,62 % $B_2O_3$. Daraus resultiert ein Molverhältnis $SiO_2 : B_2O_3$ von 37.

Die Gelierzeit dieser Lösung betrug 45 min, die Druckfestigkeit des Prüfkörpers 204 $N/cm^2$.

Die drei folgenden Vergleichsbeispiele sollen belegen, daß die gewünschte Gelierzeitverlängerung durch Verwendung nichtbeanspruchter Borate oder einfacher Basen, wie Kalilauge oder Triethanolamin, nicht erreicht wird.

Vergleichsbeispiel 1

Aus 700 ml Natronwasserglas 37/40, 193 ml enthärtetem Wasser, 47 ml einer 29,2 %igen Kaliumtetraboratlösung (Dichte = 1,279 g/cm³) und 60 ml technischer Glyoxallösung (Glyfix CS 50 der Fa. Hoechst France) wurden 1000 ml Injektionslösung hergestellt. Sie enthielt 19,64 % $SiO_2$ und 0,82 % $B_2O_3$. Daraus resultiert ein Molverhältnis $SiO_2 : B_2O_3$ von 28.

Die Gelierzeit dieser Injektionslösung betrug 20 min und war damit nicht ausreichend für den Praxiseinsatz.

Vergleichsbeispiel 2

700 ml Natronwasserglas 37/40 wurden mit 200,5 ml enthärtetem Wasser, 39,5 ml einer 28 %igen Kalilauge (Dichte 1,269 g/cm³) und 60 ml einer technischen Glyoxallösung (Glyfix CS 50 der Fa. Hoechst France) zu 1000 ml Injektionslösung gemischt. Sie enthielt 19,68 % $SiO_2$.

Die Gelierzeit betrug 21 min und war damit nicht ausreichend für den Praxiseinsatz. Ein Prüfkörper war nicht herstellbar, da nur Weichgel entstand.

Vergleichsbeispiel 3

700 ml Natronwasserglas 37/40 wurden mit 210 ml enthärtetem Wasser, 30 ml einer 20 %igen Triethanolaminlösung (Dichte = 1,032 g/cm³) und 60 ml einer technischen Glyoxallösung (Glyfix CS 50 der Fa. Hoechst) zu 1000 ml Injektionslösung gemischt. Die Lösung enthielt 19,82 % $SiO_2$ und 0,49 % Triethanolamin.

Die Gelierzeit der Injektionslösung betrug 14 min und war damit nicht ausreichend für den Praxiseinsatz.

Vergleichsbeispiel 4

Bestimmung des chemischen Sauerstoffbedarfs (CSB-Wert)

Es wurden vergleichende Bestimmungen des CSB-Wertes an Prüfkörpern durchgeführt, die einerseits mit dem Mittel gemäß der Erfindung und andererseits mit einem solchen gemäß dem Stand der Technik hergestellt worden waren.

Die Herstellung der Prüfkörper erfolgte analog den allgemeinen Angaben vor Beispiel 1.
Die verwendeten Injektionslösungen entsprachen:

(a) Beispiel 3 gemäß der Erfindung,
(b) einer Wasserglaslösung mit einem Härtergemisch gemäß dem Stand der Technik - entsprechend den nachstehenden Angaben:
57,45 ml Natronwasserglas 37/40 wurden mit 11,9 ml enthärtetem Wasser und 9,69 ml eines Dicarbonsäureester-Gemisches (Durcisseur® 1000 der Fa. Rhône Poulenc) bei Raumtemperatur (21-22°C) gemischt.

Die Zusammensetzung der verwendeten Injektionslösungen war so gewählt, daß vergleichbare Gelzeiten und Festigkeiten der Prüfkörper resultierten.

Die so erhaltenen Prüfkörper wurden - nach sieben Tagen Lagerung unter Luftabschluß - jeweils in einen 1 l-Polybecher auf ein gelochtes VA-Stahlpodest (l = 55 mm, h = 20 mm) gestellt. Anschließend wurden 900 ml dest. $H_2O$ zugegeben, der Polybecher verschlossen und das Wasser mit Hilfe eines Magnetrührwerkes (Einstellstufe 5 - 7) gerührt.

Die Entnahme von Eluat-Proben (jeweils 50 ml der Eluate) aus den Polybechern erfolgte nach 1 Stunde, 8 Stunden, 24 Stunden und nach 3 Tagen, ohne Auffüllen der Ausgangslösung.

Die Bestimmung des chemischen Sauerstoffbedarfs in mg $O_2/l$ erfolgte nach Dr. Lange Küvettentest LCK 114 (für 150 mg bis 1000 mg $O_2/l$) (Fa. Dr. Bruno Lange GmbH, Berlin).

Die erhaltenen Werte sind der folgenden Tabelle zu entnehmen.

Tabelle

CSB-Werte in mg $O_2/l$ der Eluate von Prüfkörpern

| Injektionslösung | | Gelzeit (min) | Festigkeit $(N/cm^2)$ | CSB-Werte nach | | | |
|---|---|---|---|---|---|---|---|
| | | | | 1 h | 8 h | 24 h | 3 d |
| a) | gem. Erf. | 44 | 205 | 212 | 498 | 1230 | 1628 |
| b) | Vergleich | 42 | 215 | 837 | 2244 | 7689 | 11382 |

Die erhaltenen CSB-Werte zeigen, daß die Verwendung der erfindungsgemäßen Injektionslösung zu wesentlich geringeren Werten - und damit zu einer wesentlich geringeren Belastung des Grundwassers bzw. des Bodens - führt, als die Verwendung von Injektionslösungen gemäß dem Stand der Technik.

II Zur Verfestigung und Abdichtung von mineralischen Baustoffen

Bei der Abdichtung von mineralischen Baustoffen, z.B. von Mauerwerk, ist ebenfalls eine lange Gelierzeit bei möglichst hohem Feststoffgehalt erwünscht. Dadurch dringt die Lösung stärker in das Mauerwerk ein und führt zu dem erforderlichen Effekt.

Für die Beispiele 8 bis 11 wurde das Kaliwasserglas 28/30 mit einem $SiO_2$-Gehalt von 21,04 %, dem $K_2O$-Gehalt von 8,23 %, der Dichte 1256 $kg/m^3$ und der Viskosität von 44 mPas verwendet. Dichte und Viskosität wurden bei 20°C gemessen, das Molverhältnis $SiO_2 : K_2O$ betrug 4,01.

Beispiel 8

140 g Kaliwasserglas 28/30 wurden mit 51,5 g enthärtetem Wasser, 0,5 g 41 %iger Kaliummetaboratlösung (Dichte = 1,493 $g/cm^3$)und 8 g technischer Glyoxallösung (Glyfix CS 50 der Fa. Hoechst France) zu 200 g Injektionslösung gemischt. Sie enthielt 14,73 % $SiO_2$ und 0,044 % $B_2O_3$, das Molverhältnis $SiO_2 : B_2O_3$ betrug 388. Die Gelierzeit betrug 30 min.

Beispiel 9

140 g Kaliwasserglas 28/30 wurden mit 51 g enthärtetem Wasser, 1 g 41 %iger Kaliummetaboratlösung (Dichte = 1,493 $g/cm^3$) und 8 g technischer Glyoxallösung (Glyfix CS 50 der Fa. Hoechst France) zu 200 g Injektionslösung gemischt. Diese enthielt 14,73 % $SiO_2$ und 0,088 % $B_2O_3$ und hatte ein Molverhältnis $SiO_2 : B_2O_3$ von 194. Die Gelierzeit dieser Injektionslösung betrug 37 min.

Beispiel 10

140 g Kaliwasser 28/30 wurden mit 43 g enthärtetem Wasser, 9 g einer 41 %igen Kaliummetaboratlösung (Dichte = 1,493 $g/cm^3$) und 8 g einer technischen Glyoxallösung (Glyfix CS 50 der Fa. Hoechst France) zu 200 g Injektionslösung gemischt. Sie enthielt 14,73 % $SiO_2$ und 0,78 % $B_2O_3$, das Molverhältnis $SiO_2 : B_2O_3$ betrug 21,8.
Die Gelierzeit ergab sich zu 210 min.

Vergleicht man die Gelierzeiten der mit steigendem Metaboratanteil versehenen Injektionslösungen mit einer metaboratfreien Injektionslösungen aus 140 g Kaliwasserglas 28/30, 52 g enthärtetem Wasser und 8 g technischer Glyoxallösung (Glyfix CS 50 der Fa. Hoechst France), so ergibt sich für die letztere eine vergleichsweise niedrige Gelierzeit von 23 min.

Beispiel 11

120 g Kaliwasserglas 28/30 wurden mit 65 g enthärtetem Wasser, 8 g einer 41 %igen Kaliummetaboratlösung (Dichte = 1,493 $g/cm^3$) und 7 g einer technischen Glyoxallösung (Glyfix CS 50 der Fa. Hoechst France) zu 200 g Injektionslösung gemischt. Sie enthielt 12,62 % $SiO_2$ und 0,7 % $B_2O_3$, das Molverhältnis $SiO_2 : B_2O_3$ betrug 20,9.

Diese Injektionslösung hatte eine Gelierzeit von 8 h und kann damit während einer Arbeitsschicht voll ein gesetzt werden. Im Vergleich dazu hat die metaboratfreie Injektionslösung aus 120 g Kaliwasserglas 28/30, 73 g enthärtetem Wasser, und 7 g technischer Glyoxallösung (Glyfix CS 50 der Fa. Hoechst France) eine Gelierzeit von 40 min.

III Zur Herstellung von Bindemitteln für mineralische Formkörper

Der Einsatz von silikatischen Bindemitteln in Gießereien ist bekannt. Gewünscht wird ein Bindemittel, das in der Vormischung möglichst lange offene Zeiten hat, die aber fallweise auch unter 30 min liegen können. In den Beispielen 12 bis 14 wurden eingesetzt
Natronwasserglas 48/50, mit 33,41 % $SiO_2$, 12,11 % $Na_2O$, einem Molverhhältnis $SiO_2 : Na_2O = 2,84$, einer Dichte von 1518 $kg/m^3$ und einer Viskosität von 2263 mPas (20°C) und
Natronwasserglas 43/45 mit 31,36 % $SiO_2$, 10,17 % $Na_2O$, einem Molverhältnis $SiO_2 : Na_2O = 3,18$, einer Dichte von 1449 $kg/m^3$ (20°C) und einer Viskosität von 975 mPas (20°C).

Beispiel 12

100 g Natronwasserglas 48/50 wurden gemischt mit 10 g enthärtetem Wasser, 4,1 g Kaliummetaborat und 13,4 g einer technischen Glyoxallösung (Glyfix CS 50 der Fa. Hoechst France) zu 127,5 g Bindemittel mit 26,2 % $SiO_2$ und 1,39 % $B_2O_3$. Das Bindemittel hatte ein Molverhaltnis $SiO_2 : B_2O_3$ von 21,9. Die Gelierzeit betrug 10 min. Im Vergleich dazu ergab das metaboratfreie Bindemittel aus 100 g Natronwasserglas 48/50, 10 g enthärtetem Wasser und 13,4 g technischer Glyoxallösung (Glyfix CS 50 der Fa. Hoechst France) nur eine Gelierzeit von 5,5 min.

Beispiel 13

100 g Natronwasserglas 43/45 wurden gemischt mit 10 g enthärtetem Wasser, 8,2 g Kaliummetaborat und 12 g einer technischen Glyoxallösung (Glyfix CS 50 der Fa. Hoechst France) zu 130,2 g Bindemittel mit 24,1 % $SiO_2$ und 2,67 % $B_2O_3$. Das Bindemittel hatte ein Molverhältnis $SiO_2 : B_2O_3$ von 10,5 und eine Gelierzeit von 18 min. Im Vergleich dazu ergab ein metaboratfreier Ansatz aus 100 g Natronwasserglas 43/45, 10 g enthärtetem Wasser und 12 g technischem Glyoxal (Glyfix CS 50 der Fa. Hoechst France) eine Gelierzeit von 5,5 min.

Beispiel 14

100 g Natronwasserglas 43/45 wurden gemischt mit 5 g enthärtetem Wasser, 12,3 g Kaliummetaborat und 14,1 g einer technischen Glyoxallösung (Glyfix CS 50 der Fa. Hoechst France) zu 131,4 g Bindemittel mit einem $SiO_2$-Gehalt von 23,87 % und einem $B_2O_3$-Gehalt von 3,98 %. Das Bindemittel hatte ein Molverhältnis $SiO_2 : B_2O_3$ von 7 und eine Gelierzeit von 18 min. Im Vergleich dazu ergab der metaboratfreie Ansatz aus 100 g Natronwasserglas 43/45, 5 g enthärtetem Wasser und 14,1 g technischer Glyoxallösung (Glyfix CS 50 der Fa. Hoechst France) eine Gelierzeit von 3,5 min.

**Patentansprüche**

1. Mittel zum Abdichten und/oder Verfestigen und/oder zum Binden auf der Basis von modifizierten Alkalimetallsilikatlösungen, dadurch gekennzeichnet, daß sie Alkalimetallsilikatlösungen mit einem Molverhältnis $SiO_2 : Me_2O$, wobei Me Natrium oder Kalium bedeutet, von 2 bis 4,5, Natriummetaborat und/oder Kaliummetaborat in einem Molverhältnis $SiO_2 : B_2O_3$ von 5 bis 400 und Glyoxal enthalten.

2. Mittel nach Anspruch 1, dadurch gekennzeichnet, daß die $SiO_2 : MeO_2$-Molverhältnisse der Alkalimetallsilikate 3,0 bis 4,0 betragen.

3. Mittel nach Ansprüchen 1 und/oder 2, dadurch gekennzeichnet, daß das $SiO_2 : B_2O_3$-Molverhältnis 7 bis 60 beträgt.

4. Mittel nach Ansprüchen 1 bis 3, dadurch gekennzeichnet, daß das Glyoxal in einer Menge von 0,4 Gew.-% bis 12 Gew.-%, vorzugsweise von 1,5 Gew.-% bis 7 Gew.-% enthalten ist.

5. Mittel nach Ansprüchen 1 bis 4, dadurch gekennzeichnet, daß die $SiO_2$-Konzentrationen bis 30 Gew.-% betragen.

6. Verwendung der Mittel nach Ansprüchen 1 bis 5 zum Abdichten und/oder Verfestigen von Erdreich und Böden.

7. Verwendung der Mittel nach Ansprüchen 1 bis 5 zum Abdichten und/oder Verfestigen von mineralischen Baustoffen.

8. Verwendung der Mittel nach Ansprüchen 1 bis 5 zum Binden von mineralischen Formkörpern.

9. Verfahren zum Abdichten und/oder Verfestigen von Erdreich und Böden, dadurch gekennzeichnet, daß Mittel nach Ansprüchen 1 bis 5 eingesetzt werden.

10. Verfahren zum Abdichten und/oder Verfestigen von mineralischen Baustoffen, dadurch gekennzeichnet, daß Mittel nach Ansprüchen 1 bis 5 eingesetzt werden.

11. Verfahren zum Verfestigen und Binden von mineralischen Formkörpern, dadurch gekennzeichnet daß Mittel nach Ansprüchen 1 bis 5 eingesetzt werden.

**Claims**

1. Sealing and/or stabilizing and/or binding preparations based on modified alkali metal silicate solutions, characterized in that they contain alkali metal silicate solutions with a molar ratio of $SiO_2$ to $Me_2O$ (Me = sodium or potassium) of from 2 to 4.5, sodium metaborate and/or potassium metaborate in a molar ratio of $SiO_2$ to $B_2O_3$ of from 5 to 400 and glyoxal.

2. Preparations as claimed in claim 1, characterized in that the $SiO_2:Me_2O$ molar ratios of the alkali metal silicates are from 3.0 to 4.0.

3. Preparations as claimed in claims 1 and/or 2, characterized in that the $SiO_2:B_2O_3$ molar ratio is from 7 to 60.

4. Preparations as claimed in claims 1 to 3, characterized in that the glyoxal is present in a quantity of from 0.4% by weight to 12% by weight and preferably in a quantity of from 1.5% by weight to 7% by weight.

5. Preparations as claimed in claims 1 to 4, characterized in that the $SiO_2$ concentrations are up to 30% by weight.

6. The use of the preparations claimed in claims 1 to 5 for sealing and/or stabilizing ground and soils.

7. The use of the preparations claimed in claims 1 to 5 for sealing and/or stabilizing mineral building materials.

8. The use of the preparations claimed in claims 1 to 5 for binding mineral moldings.

9. A process for sealing and/or stabilizing ground and soils, characterized in that the preparations claimed in claims 1 to 5 are used.

10. A process for sealing and/or stabilizing mineral building materials, characterized in that the preparations claimed in claims 1 to 5 are used.

11. A process for stabilizing and binding mineral moldings, characterized in that the preparations claimed in claims 1 to 5 are used.

**Revendications**

1. Agent d'étanchéification et/ou de consolidation et/ou de liaison à base de solutions de silicates de métal alcalin modifiées, caractérisé en ce qu'ils renferment des solutions de silicate de métal alcalin ayant un rapport molaire $SiO_2/Me_2O$ – pour lesquels Me signifie du sodium ou du potassium – de 2 à 4,5, du métaborate de sodium et/ou de potassium ayant un rapport molaire $SiO_2/B_2O_3$ allant de 5 à 400, et du glyoxal.

2. Agent selon la revendication 1, caractérisé en ce que les rapports molaires $SiO_2/MeO_2$ des silicates de métal alcalin s'élèvent à 3,0 à 4,0.

3. Agent selon la revendication 1 et/ou 2, caractérisé en ce que le rapport molaire $SiO_2/B_2O_3$ s'élève à 7 à 60.

4. Agent selon les revendications 1 à 3, caractérisé en ce que le glyoxal est contenu en quantité allant de 0,4% en poids à 12% en poids, de préférence de 1,5 à 7% en poids.

5. Agent selon les revendications 1 à 4, caractérisé en ce que les concentrations en $SiO_2$ s'élèvent jusqu'à 30% en poids.

6. Utilisation de l'agent selon les revendications 1 à 5 pour étancher, et/ou consolider la terre et le sol.

7. Utilisation de l'agent selon les revendications 1 à 5, pour l'étanchéification et/ou la consolidation de matériaux de construction à base de minerais.

8. Utilisation de l'agent selon les revendications 1 à 5 pour lier les corps de moulage à base de minerais.

9. Procédé d'étanchéification et/ou de consolidation de la terre et du sol, caractérisé en ce que l'on met en œuvre l'agent selon les revendications 1 à 5.

10. Procédé d'étanchéification et/ou de consolidation des matériaux de construction à base de minerais, caractérisé en ce que l'or met en œuvre l'agent selon les revendications 1 à 5.

11. Procédé de consolidation et de liaison de solides de moulage à base de minerais, caractérisé en ce que l'on met en œuvre l'agent selon les revendications 1 à 5.